# EUROPEAN PATENT SPECIFICATION

(11) **EP 2 710 095 B1**
(45) Date of publication and mention of the grant of the patent: **01.05.2019**
(21) Application number: 12727183.1
(22) Date of filing: 11.05.2012
(51) Int. Cl.: C10J 3/00, C10K 3/00, C01B 3/36

(54) **PARTIAL OXIDATION OF METHANE AND HIGHER HYDROCARBONS IN SYNGAS STREAMS**
TEILOXIDATION VON METHAN UND HÖHEREN KOHLENWASSERSTOFFEN IN SYNTHESEGASSTRÖMEN
OXYDATION PARTIELLE DE METHANE ET D'HYDROCARBURES PLUS LOURDS DANS DES FLUX DE GAZ DE SYNTHESE

(30) Priority: 16.05.2011 US 201161486486 P; 10.05.2012 US 201213468189
(43) Date of publication of application: 26.03.2014
(73) Proprietor: Praxair Technology, Inc., Danbury, CT 06810 (US)
(72) Inventor: BOOL, Lawrence, East Aurora, NY 14052 (US); CHAKRAVARTI, Shrikar, East Amherst, NY 14051 (US); LAUX, Stefan, Ef, Williamsville, NY 14221 (US); DRNEVICH, Raymond, F., Clarence Center, NY 14032 (US); BONAQUIST, Dante, P., Grand Island, NY 14072 (US); THOMPSON, David, R., Grand Island, NY 14072 (US)
(74) Representative: BRP Renaud & Partner mbB Rechtsanwälte Patentanwälte Steuerberater
(86) International application number: PCT/US2012/037562
(87) International publication number: WO 2012/158536

(56) References cited:
- WO-A1-2011/107661
- CA-C- 1 311 923
- US-A- 4 515 604
- US-A1- 2006 101 715
- WANG ET AL: "Performance optimization of two-staged gasification system for woody biomass", FUEL PROCESSING TECHNOLOGY, ELSEVIER BV, NL, vol. 88, no. 3, 28 February 2007 (2007-02-28), pages 243-250, XP005914478, ISSN: 0378-3820, DOI: 10.1016/J.FUPROC.2006.10.002
- KLEMM M: "Catalytic partial oxidation solves central problem of biomass gasification", ERDOEL ERDGAS KOHLE/EKEP OCTOBER 2005 URBAN VERLAG HAMBURG/WIEN GMBH DE, vol. 121, no. 10, October 2005 (2005-10), pages 356-359, XP8153407,

## Description

### Field of the Invention

The present invention relates to treating syngas streams, especially syngas streams derived from gasification of carbonaceous feed material such as biomass.

### Background of the Invention

In the production of fuel from carbonaceous feed material such as biomass, the carbonaceous feed material is treated to produce a gaseous stream that contains compounds which can be chemically converted into compounds that are useful as, for instance, liquid transportation fuels. The present invention is useful in the treatment of the gaseous stream (referred to herein as "syngas"), that is formed upon gasification of carbonaceous feed material such as biomass, to enhance the efficiency of production of liquid transportation fuels from the syngas.

US2006/101715 discloses a process for converting coal into synthesis gas in which the coal is gasified in a gasifier after which at least part of the product is subjected to a non-catalytic partial oxidation. The partial oxidation converts tar into more synthesis gas.

### Brief Summary of the Invention

The present invention is a method of syngas treatment as it is defined in claim 1 .

As used herein, "biomass" means algae or material containing any of cellulose or hemicellulose or lignin, including but not limited to Municipal Solid Waste (MSW), wood (including wood chips, cut timber; boards, other lumber products, and finished wooden articles, and wood waste including sawdust, and pulpwood from a variety of trees including birch, maple, fir, pine, spruce), and vegetable matter such as grasses and other crops, as well as products derived from vegetable matter such as rice hulls, rice straw, soybean residue, corn stover, and sugarcane bagasse.

As used herein, "carbonaceous feed material" means biomass, coal of any rank (including anthracite, bituminous, and lignite), coke produced from coal of any rank, petroleum coke, or bitumen.

As used herein, "fossil fuel" means product useful as fuel that is either found in deposits in the earth and used in the form as found, or produced by separatory and/or chemical processing of product that is found in deposits in the earth.

As used herein, "product fuel" means hydrocarbon material (which includes oxygenated hydrocarbon material) useful as fuel and containing product selected from the group consisting of alkanes liquid at 25C and atmospheric pressure, alkenes liquid at 25C and atmospheric pressure, alkanols liquid at 25C and atmospheric pressure, and mixtures thereof.

As used herein, "tars" means any hydrocarbon with a boiling temperature at ambient conditions greater than or equal to that of benzene, and includes mixtures of two or more such hydrocarbons.

### Brief Description of the Drawings

Figure 1 is a flowsheet of a process for converting biomass to fuel, with which the present invention can be practiced.
Figure 2 is a cross-sectional view of a hot oxygen generator useful in the practice of the present invention.
Figure 3 is a partial cross-sectional view of a reformer unit useful in the practice of the present invention.
Figure 4 is a graph of incremental combined yield of hydrogen plus carbon monoxide against stoichiometric ratio.
Figure 5 is a graph of incremental combined yield of hydrogen plus carbon monoxide against residence time in a reformer unit.

### Detailed Description of the Invention

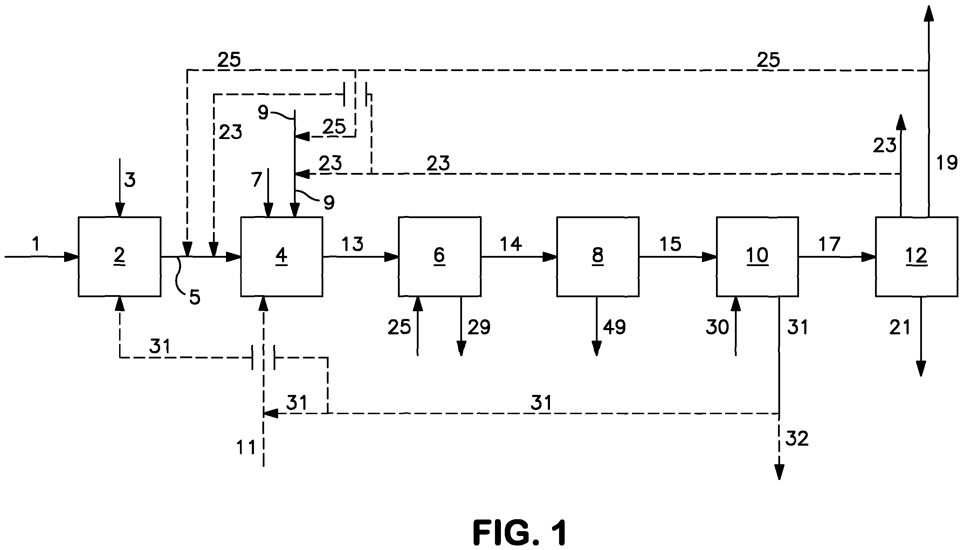

The present invention is particularly useful in operations that convert biomass to product fuel. Figure 1 is a flowsheet that shows the typical steps of such an operation, also including a process step that incorporates the present invention.

The following description will refer to embodiments in which biomass feed material is treated by gasification to produce fuels and especially alcohols and diesel. Those skilled in the art will recognize that this embodiment can be suitably extended to other carbonaceous feedstocks, e.g. coal, coke, petroleum coke, as well as to the production of gasoline and other Fischer Tropsch liquids. Also, this invention can be adapted to treatment of syngas derived from biomass by reaction technology other than gasification of the biomass, such as by pyrolysis. Where the following description refers to gasification of biomass, it should not be limited to gasification or to biomass except where specifically indicated.

Referring to Figure 1, stream 1 of biomass is fed to gasification unit 2. Stream 1 may previously have been treated to lower the moisture content of the biomass, such as by heating the biomass.

Gasification stream 3 is also fed to gasification unit 2. Stream 3 typically contains air, steam, or oxygen, or two or all three of air, steam and oxygen. Unit 2 may comprise one gasification reactor or a connected series of stages which overall achieve the desired gasification, that is, the formation of a gaseous stream 5 which contains (at least) hydrogen and carbon monoxide and which typically contains other substances such as carbon dioxide, water vapor, hydrocarbons (including methane), volatilized tars, particulate matter, and sulfides.

Typically, unit 2 comprises a moving bed gasifier, such as Lurgi® gasifiers or a fluidized bed gasifier. Examples of commercially available fluidized bed gasifiers include the indirect dual-bed gasifier developed by Silvagas (current technology provider - Rentech) or the direct O₂-blown gasifier developed by Gas Technology Institute (current technology providers - Synthesis Energy Systems, Andritz-Carbona). A discussion of biomass gasifiers can be found in the open literature, e.g. A Survey of Biomass Gasification by Reed & Gaur, 2001. These biomass gasifiers produce synthesis gas which includes hydrogen and carbon monoxide at a molar ratio (hydrogen: carbon monoxide) of less than 2:1. The hydrogen and the carbon monoxide are generated by breakdown of the biomass material under conditions such that there is not complete oxidation to water and carbon dioxide. Gasification stream 3, which preferably contains steam and oxygen, is fed into the bed so that it passes through the biomass and contacts the biomass, heats the biomass, and promotes the aforementioned breakdown of the biomass material. Gasification stream 3 is typically fed at a temperature in the range of 100°F to 750°F (37.8°C to 399°C) and a pressure of 30 psia to 550 psia (0.207 MPa to 3.79 MPa).

Within a moving bed gasifier, different reaction zones may be present from top to bottom, namely a drying zone where moisture is released, a devolatilization zone where pyrolysis of biomass takes place, a gasification zone where mainly the endothermic reactions occur, an exothermic oxidation or combustion zone, and an ash bed at the bottom of the gasifier. If the gasification stream contacts the biomass in a countercurrent fashion, hot dry devolatilized biomass reacts with the relatively cold incoming gasification stream, and hot raw gas before exiting as stream 5 exchanges heat with relatively cold incoming biomass. The temperature profile in each part of a gasifier varies as the biomass moves through different zones in the gasifier. In the gasification zone, the temperature may vary between 1400°F and 2200 °F (760°C and 1204°C). In fluid bed gasifiers the biomass solids are effectively completely mixed. The temperature in all parts of the bed are essentially the same and can range from about 1200°F and 1600°F (649°C and 871°C). The primary benefits of a fluidized bed gasifier are high heat transfer rates, fuel flexibility and the ability to process feedstock with high moisture content. A variety of fluidized bed gasifiers have been and continue to be used/developed for biomass gasification. Key process parameters include type of particle, size of particle and manner of fluidization. Examples of configurations deployed for the biomass gasification application include the bubbling fluidized bed, where bubbles of gas pass through the solids, to circulating fluidized bed, where the particles are carried out with the gas, subsequently separated by a cyclone and returned to the gasifier. Fluidized bed gasifiers may be operated below the ash fusion temperature of the feedstock, or may have areas of the bed that are above the ash fusion temperature to help agglomerate ash before it leaves the gasifier.. The generated syngas will contain impurities and thus will require conditioning similar to the moving bed gasifier described above. Tar levels may be less but still sufficient to cause problems with downstream heat exchangers and processing units.

Low temperature gasifiers such as fluidized bed gasifiers are likely to be more prevalent in biomass gasification applications. With some low temperature gasifier types, such as the bubbling fluidized bed (BFB) or circulating fluid bed (CFB) types, the syngas can contain 5 - 15 vol.% CH₄, 1 - 5vol. % C₂s (that is, hydrocarbons containing 2 carbon atoms), and 1 - 100 g tar/Nm³ syngas on a wet basis. The CH₄ that is present will act as an inert in the downstream process for production of product fuels, be it catalytic, i.e., Fischer-Tropsch, or fermentation. Thus, CH₄ formation in the gasifier reduces the overall fraction of carbon in the biomass being converted to liquids / product fuel. Tars are produced by thermal decomposition or partial oxidation of any organic material. Given the high boiling points of these species they will condense from the syngas stream as it is cooled before downstream processing, causing many operational issues. Conventional syngas cleanup units typically contain a tar scrubbing system which is expensive and maintenance intensive.

The gas stream 5 that is produced in gasification unit 2 typically leaves the gasification unit 2 at a temperature of between about 1000°F and 1600°F (538°C and 871°C).

Stream 5 is then treated in unit 4 in accordance with the present invention (as more fully described herein) to reduce the amounts of methane that are present in the stream and to produce additional amounts of hydrogen and carbon monoxide (CO). If tars are present in the stream, some or all of tars present can also be converted to lower molecular weight products.

Stream 13 which is produced in unit 4 is preferably cooled and treated to remove substances that should not be present when the stream is fed to reactor 10 (described herein) that produces fuel. Unit 6 represents a unit which cools stream 13, for instance by heat exchange to feed water 25 to produce stream 29 of heated water and/or steam. Unit 6 can also comprise a shift conversion reactor in which carbon monoxide in stream 13 is reacted with water vapor to produce hydrogen, thereby providing a way to adjust the ratio of hydrogen to carbon monoxide in the stream.

The resultant cooled stream 14 is fed to unit 8. Unit 8 represents a conditioning stage to remove impurities 49 that may be present such as particulates, acid gases including CO₂, ammonia, sulfur species, and other inorganic substances such as alkali compounds. Impurities may be removed in one unit or in a series of units each intended to remove different ones of these impurities that are present or to reduce specific contaminants to the desired low levels. Unit 8 represents the impurities removal whether achieved by one unit or by more than one unit. Cooling and impurities removal are preferably performed in the sequence shown, but may be performed in the reverse sequence, or all in one unit. Details are not shown, but should be obvious to those skilled in the art. Unit 8 typically includes operations for final removal of particulates, NH₃, sulfur species and CO₂ removal. The CO₂ removal is typically a performed by solvent-based process, which either uses a physical solvent, e.g. methanol, or a chemical solvent, e.g. amine. For installations without the addition of heat and oxygen as in the present invention, when the syngas typically contains on a wet basis >20 vol.% CO₂ and possibly >30 vol.% CO₂, it is essential to have a CO₂ removal system. Not having a CO₂ removal system significantly increases the diluent level in the syngas being fed to the liquid fuel conversion unit. Besides lowering the H₂ and CO conversion levels in the reactor that produces product fuel, the additional CO₂ will necessitate larger equipment (piping and reactors). These operations for removal of impurities can be carried out in separate reactors, or two or more of them can be carried in the same reactor, depending on the technology employed.

The resulting cooled, conditioned gaseous stream 15 contains at least hydrogen and carbon monoxide. The exact composition can vary widely depending on the biomass feedstock, gasifier type, intermediate processing steps, and operating conditions. Stream 15 typically contains (on a dry basis) 20 to 50 vol.% of hydrogen, and 10 to 45 vol.% of carbon monoxide. Stream 15 typically also contains carbon dioxide in amounts from < 1 to 35 vol.%.

Stream 15 is then fed to reactor 10 wherein product fuel is produced. Preferably, product fuel is produced by a catalytic conversion process, e.g. Fischer-Tropsch process. However, the present invention is advantageous also when the product fuel is produced by fermentation or other conversion mechanisms. If a catalytic conversion process is used then stream 15 may require some compression before being fed to reactor 10 depending on the pressure of stream 15. If the end-product is a diesel-type of fuel, a single stage of compression may suffice. For alcohols, e.g. methanol, ethanol, 2 - 3 stages of compression may be required.

Considering Fischer-Tropsch conversion in general, the Fischer-Tropsch reaction may be carried out in any reactor that can tolerate the temperatures and pressures employed. The pressure in the reactor is typically between 300 psia and 1500 psia (2.06 MPa and 10.34 MPa), while the temperature may be between 400°F and 700°F (204°C and 371°C). The reactor will thus contain a Fischer-Tropsch catalyst, which will be in particulate form. The catalyst may contain, as its active catalyst component, Co, Fe, Ni, Ru, Re and/or Rh. The catalyst may be promoted with one or more promoters selected from an alkali metal, V, Cr, Pt, Pd, La, Re, Rh, Ru, Th, Mn, Cu, Mg, K, Na, Ca, Ba, Zn and Zr. The catalyst may be a supported catalyst, in which case the active catalyst component, e.g. Co, is supported on a suitable support such as alumina, titania, silica, zinc oxide, or a combination of any of these.

In the Fischer-Tropsch conversion, the hydrogen and carbon monoxide in stream 15 react under pressure in the presence of a catalyst at reaction temperature in the indicated range to yield a mixtures of alkanols, or mixtures of alkanes and alkenes, which may contain 1 to greater than 60 carbon atoms. Water and carbon dioxide are also produced.

As the Fischer-Tropsch reaction is exothermic, steam-producing cooling coils are preferably present in the Fischer-Tropsch reactors to remove the heat of reaction. In some types of reactors, fresh catalyst is preferably added to reactor 10 when required without disrupting the process to keep the conversion of the reactants high and to ensure that the particle size distribution of the catalyst particles is kept substantially constant. In other types of reactors, such as packed-bed reactors, such fresh catalyst addition is not necessary; instead, catalyst is removed and replaced on a periodic basis

The manner of carrying out a variation of the Fischer-Tropsch reaction for producing alcohols from syngas is well known and has been practiced for several years. Useful disclosure is found in "Synthesis of Alcohols by Hydrogenation of Carbon Monoxide". R. B. Anderson, J. Feldman and H. H. Storch, Industrial & Engineering Chemistry, Vol. 44, No. 10, pp 2418 - 2424 (1952). Several patents also describe different aspects of the Fischer-Tropsch conversion process that can be practiced to produce alkanols including ethanol. For example, U.S. Patent No. 4,675,344 provides details on process conditions, e.g. temperature, pressure, space velocity, as well as catalyst composition to optimize the Fischer-Tropsch process for increased production of C2 to C5 alcohols versus methanol. This patent also indicates that a desirable hydrogen: carbon monoxide ratio in the gas feed stream is in the range of 0.7:1 to 3:1. U.S. Patent No. 4,775,696 discloses a novel catalyst composition and a procedure for synthesis of alcohols via the Fischer-Tropsch conversion. U.S. Patent No. 4,831,060 and U.S. Patent No. 4,882,360 provide a comprehensive discussion on the preferred catalyst composition and synthesis procedures for a producing a product mix with a higher ratio of C2-5 alcohols versus methanol. The catalyst is typically comprised of:
(1) A catalytically active metal of molybdenum, tungsten or rhenium, in free or combined form;
(2) A co-catalytic metal of cobalt, nickel or iron, in free or combined form;
(3) A Fischer-Tropsch promoter, e.g. alkali or alkaline earth metals such as potassium;
(4) An optional support, e.g. alumina, silica gel, diatomaceous earth.
Use of the above catalyst composition provides both high production rates and high selectivities.

When the desired product fuel is methanol, the catalytic conversion is operated in any manner known to favor the formation of methanol, such as carrying out the reaction with a copper-zinc catalyst.

The overall stoichiometry for the production of alcohols from syngas using the Fischer-Tropsch process can be summarized as follows ("Thermochemical Ethanol via Indirect Gasification and Mixed Alcohol Synthesis of Lignocellulosic Biomass". S. Phillips, A. Aden, J. Jechura, D. Dayton and T. Eggeman Technical Report, NREL/TP-510-41168, April 2007):

n CO + 2n H₂ → CₙH₂ₙ₊₁OH + (n-1) H₂O

As can be seen from this stoichiometry, the optimal molar ratio of hydrogen to carbon monoxide in the syngas is 2:1. A slightly lower ratio is compensated somewhat by the catalysts used in for mixed alcohol production (e.g. molybdenum sulfide), which are known to provide some water-gas shift activity. Occurrence of the water-gas shift reaction, shown here:

CO + H₂O → CO₂ + H₂

in the Fischer-Tropsch reactor effectively increases the hydrogen:carbon monoxide ratio and correspondingly, increases conversion of syngas to ethanol.

Stream 15 can if desired be fed into one or more than one location in the reactor or reactors that form the desired fuel (not shown).

The mixture of products formed in reactor 10 is represented in Figure 1 as stream 17. This stream 17 is treated in product recovery unit 12 to recover stream 21 of the desired product fuel, such as ethanol, as well as stream 23 of liquid and/or solid by-products (such as longer-chain alkanes and/or alkanols, e.g. naphtha), and stream 19 of gaseous byproducts. Stage 12 is shown separate from reactor 10 but in practice the Fischer-Tropsch/catalytic reaction and the ensuing separation of products may be carried out in one overall processing unit which includes a series of more than one operation. Recovery of the desired product in stage 12 is carried out by distillation or other separatory techniques which are familiar to those experienced in this field. In stage 12, components of stream 17 may also be subjected to treatment such as hydrocracking, hydrotreating, and isomerization, depending on the desired end-products and their desired relative amounts. Another configuration could involve use of a fermentation reactor in unit 10. The final product in this case is typically ethanol. Here, unit 12 will typically include a gas-liquid separator, a distillation column and a molecular sieve. The unreacted tail gas from the gas-liquid separator constitutes stream 19, and where employed, stream 25.

Gaseous stream 19 comprises at least one of hydrogen, carbon monoxide, water vapor, and light hydrocarbons such as methane and/or C2 - C8 hydrocarbons with 0 to 2 oxygen atoms. For each component of stream 19, the entire amount thereof may have been formed in reactor 10, or the entire amount may have been fed to reactor 10 and not reacted therein, or the amount of the component may be a combination of amounts formed and amounts fed to reactor 10 and not reacted therein.

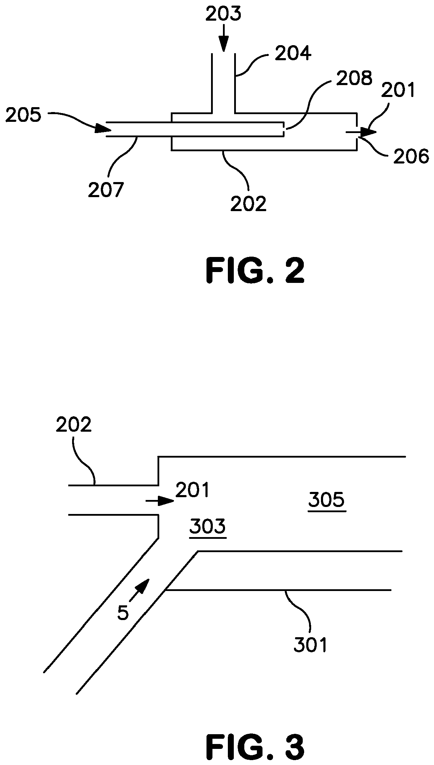

Stream 25, which is at least a portion or possibly all of stream 19, can be employed in unit 4, as a fuel that is combusted or otherwise reacted to provide heat, as described herein with respect to the present invention. Stream 25 or a portion of stream 25 can be fed as fuel 205 (see Figure 2) that is fed to hot oxygen generator 202 and combusted in hot oxygen generator 202 as described herein. Stream 25, or a portion of stream 25, can be fed into stream 5 that is then fed into unit 4. Stream 23 can be used as a reactant in other operations, can be used as fuel in other process steps, or flared.

Steam (stream 31) formed from water stream 30 that is used to remove heat from reactor 10 can be optionally fed to unit 4 or gasification unit 2.

Referring again to Figure 1, in unit 4 (also referred to herein as a reformer) the present invention furnishes oxygen and supplemental heat to the syngas stream 5. Supplemental heat can be provided in any of various ways, as described herein. The supplemental heat can be provided by direct heat transfer of heat of combustion of supplementary fuel and oxidant added to the syngas (i.e., products of combustion are contained within the syngas stream). Alternately, electrical heating (plasma) or indirect heat transfer of heat of combustion (generated separately) can be used to transfer heat to the syngas. An oxidant, preferably oxygen in a stream comprising at least 90 vol.% oxygen, is also added to the syngas for partial oxidation of methane and tars. Optionally, secondary reactants, such as steam or hydrocarbons, could be added to the reformer to tailor the final syngas characteristics to the downstream processing.

In a preferred embodiment, the supplemental heat is provided simultaneously with the oxidant for partial oxidation by the use of a hot oxygen generator. By injecting both the heat and the oxidant into the syngas simultaneously with the hot oxygen generator, it is possible to enhance mixing, accelerate oxidation kinetics and accelerate the kinetics of the reforming of methane and tars in the syngas stream.

Referring to Figure 2, to provide a high velocity stream 201 of hot oxygen, stream 203 of oxidant having an oxygen concentration of at least 30 volume percent and preferably at least 85 volume percent is provided into a hot oxygen generator 202 which is preferably a chamber or duct having an inlet 204 for the oxidant 203 and having an outlet nozzle 206 for the stream 201 of hot oxygen. Most preferably the oxidant 203 is technically pure oxygen having an oxygen concentration of at least 99.5 volume percent. The oxidant 203 fed to the hot oxygen generator 202 has an initial velocity which is generally within the range of from 50 to 300 feet per second (fps) (55 to 329 km/h) and typically will be less than 200 fps (219 km/h).

Stream 205 of fuel is provided into the hot oxygen generator 202 through a suitable fuel conduit 207 ending with nozzle 208 which may be any suitable nozzle generally used for fuel injection. The fuel may be any suitable combustible fluid examples of which include natural gas, methane, propane, hydrogen and coke oven gas, or may be a process stream such as stream 25 obtained from stream 19. Preferably the fuel is a gaseous fuel. Liquid fuels such as number 2 fuel oil or byproduct stream 23 may also be used, although it would be harder to maintain good mixing and reliable and safe combustion with the oxidant with a liquid fuel than with a gaseous fuel.

The fuel 205 provided into the hot oxygen generator 202 combusts therein with oxidant 203 to produce heat and combustion reaction products such as carbon dioxide and water vapor.

The combustion reaction products generated in the hot oxygen generator 202 mix with the unreacted oxygen of the oxidant 203, thus providing heat to the remaining oxygen and raising its temperature. Preferably, the fuel 205 is provided into the hot oxygen generator 202 at a velocity that is suitable to sustain a stable flame for the particular arrangement of nozzle 208 within generator 202. The velocity of the fuel at nozzle 208 serves to entrain oxidant into the combustion reaction thus establishing a stable flame. The fuel velocity enables further entraining of combustion reaction products and oxidant into the combustion reaction, this improving the mixing of the hot combustion reaction products with the remaining oxygen within the hot oxygen generator 202 and thus more efficiently heating the remaining oxygen.

Generally the temperature of remaining oxidant within the hot oxygen generator 202 is raised by at least about 500 °F (278 °C), and preferably by at least about 1000 °F (556 °C). The hot oxygen stream 201 obtained in this way is passed from the hot oxygen generator 202 into unit 4 through a suitable opening or nozzle 206 as a high velocity hot oxygen stream having a temperature of at least 2000 °F (1093 °C). Generally the velocity of the hot oxygen stream will be within the range of from 500 to 4500 feet per second (fps) (549 to 4938 km/h), and will typically exceed the velocity of stream 203 by at least 300 fps (329 km/h).

The composition of the hot oxygen stream depends on the conditions under which the stream is generated, but preferably it contains at least 50 vol.% O₂. The formation of the high velocity hot oxygen stream can be carried out in accordance with the description in U.S. Patent No. 5,266,024.

By using supplemental heat in combination with an oxidant the partial oxidation reactions of the reforming can proceed while consuming less of the CO and H₂ that are in the raw syngas which is fed to the reformer unit 4.

The supplemental heat must be higher than that provided by simply preheating oxygen to 600 °F (316°C), (e.g. more than 125 Btu/lb of oxygen added (290.75 kJ/kg O₂)). Increasing the temperature in the reformer by use of supplementary heat enhances the reforming kinetics, and therefore increases the effectiveness of the reformer in converting tar and methane to syngas.

The injection rate of the supplementary oxidant is preferably controlled to reform the methane and tars to form species such as CO and H₂ while reducing the formation of CO₂ and H₂O which represents consumption of desirable species.

This method of providing heat and oxygen has a number of benefits. First, the hot oxidant stream acts as a heat carrier to inject heat into the raw syngas. Second, the hot oxidant stream contains radicals from the combustion of the fuel, which has been shown to enhance reaction kinetics and tar reforming. The extremely high velocity, high momentum hot oxidant jet also enhances mixing between the oxidizer and the syngas. As appropriate the high velocity jet can also be used to inject secondary reactants such as steam by using the high velocity jet to mix oxidizer with the secondary reactants as it also reacts with the syngas.

Figure 3 depicts a preferred specially designed reformer 301 in which a stream 201 of hot oxygen (which optionally also contains steam) can be mixed with the syngas 5 from biomass gasification. This reformer 301 would be designed to provide long residence time while minimizing capital cost requirements. The reformer design should facilitate mixing of stream 201 with the raw syngas 5, as well as reaction of the mixture of streams 201 and 5. One way to accomplish this would be to provide a transitional turbulent mixing zone 303 in which the hot oxygen fed as stream 201 and syngas fed as stream 5 mix and ignite. This zone 303 could be simply a well designed refractory lined duct or passage. The optimal design of the transitional zone 303 may depend on the size of the reformer 4. In some cases, particularly with smaller reformers it may be possible to use a single jet of hot oxygen at any given location to mix with the syngas. Larger installations may require multiple jets of hot oxygen at any given location. In all cases this zone 303 should be designed to minimize 'short circuiting' of the raw syngas around the oxidant jet(s). Raw syngas that short circuits the mixing zone will pass into and out of the reformer unreacted and reduce the overall reformer effectiveness. Common design tools, such as computational fluid dynamics (CFD) can be used to ensure correct mixing. The transitional zone 303 should also be designed to minimize heat loss. Finally, kinetic modeling has suggested that overall reforming effectiveness is enhanced if the interior walls of the transitional zone 303 section radiate heat to the location of jet 201 to enhance the onset of the reforming reactions. These kinetic simulations also suggest that a substantial portion of the reforming takes place within the oxidant jet(s) 201 as syngas is entrained into the jet(s) 201.

Once reaction between the syngas 5 and the hot oxidant 201 has consumed the oxygen of the hot oxidant, , the resulting hot gas mixture enters a reforming section 305 where reforming reactions, such as the methane reforming and water gas shift reactions, are allowed to take place. This reformer may or may not contain a reforming catalyst. Additional heat or oxidant can be supplied to the reformer to optimize the overall reforming effectiveness. Residence time in the reformer should be as long as possible (2-3 seconds). Further, both the transitional zone 303 and reforming section 305 should be designed such that deposition of char/ash carried over from the gasifier is minimized unless provisions are included to remove the ash during operation.

There are numerous alternative embodiments of the current invention. The applicability of each alternative is dependent on the combination of the raw syngas characteristics (temperature and composition) and reformer design. Preferred alternatives are discussed below.

### Separate injection of heat and oxidizer

One alternative is to add the supplemental heat as heat of combustion produced by combusting fuel and oxidant having an oxygen content of at least 90 vol.% within the reformer unit 4, using a suitable burner (referred to as an oxy-fuel burner) while separately feeding into the reformer unit oxygen required for the partial oxidation/reforming reactions. The oxy-fuel burner fired into the syngas stream is used to raise the temperature of the syngas. Oxygen is injected separately for the partial oxidation of the methane and/or tars. Since the radicals from oxy-fuel combustion are injected separately from the oxygen for partial oxidation, initiation of the partial oxidation reactions may be delayed. This would lead to a longer residence time requirement to achieve a given level of reforming. Separate injection of heat (oxy-fuel burner) and oxygen could be used to avoid hot spots in the reformer.

### Addition of supplementary fuel and oxygen to syngas in addition to oxidizer

Another embodiment of the current invention is to add supplementary fuel and oxygen directly into the syngas in reformer unit 4, without the use of a burner. At high enough temperatures the fuel and oxygen will combust in the reformer and raise the reformer temperature. Enough oxygen would need to be fed in order to combust the added fuel and to partially oxidize the methane and/or tars. Since heat release in this mode is more 'diffuse' it would require fairly long residence times to be effective. Experimental data obtained for this embodiment suggest that for a long residence time reformer this alternate mode can provide incremental syngas yields comparable to the optimal embodiment (hot oxygen injection). However, if the fuel is less reactive (such as methane) then the supplementary oxygen may actually react with more reactive syngas components, such as hydrogen, before it can react with the target fuel.

### Non-combustion heating of syngas with oxygen addition

Although many of the embodiments of the current invention provide supplemental heat to the syngas by combustion of a supplementary fuel, it is also possible to increase the temperature of the syngas (in conjunction with oxygen injection) by non-combustion methods. For example, electric heating elements could be used. Since these elements would be operating in extreme environments, this option is less attractive. Heat could also be added to the raw syngas through the use of a plasma device, with or without simultaneous injection of the oxidant or secondary reactants. If the addition of heat by non combustion means is significantly separated from the oxidant injection, unacceptable carbon (soot) formation may occur due to cracking of the tars before reforming reactions can take place.

### Indirect heating of syngas with oxygen addition

Heat can also be added to the syngas by indirect methods, by which is meant that the heat generating device or combustion products are not in direct contact with the syngas. Examples include combustion of a supplemental fuel with an oxidant, which could be air or a gaseous stream having an oxygen content higher than that of air, in tubes placed in the syngas stream. This process may be attractive from an operating standpoint since any fuel could be used (including solids) and any oxidant could be used (including air). However, from a thermodynamic standpoint this is the least efficient method for heating the syngas as the outlet temperature of the heater will be fairly high (even with air preheating). The high process temperatures will also create significant materials restrictions and may make this method impractical.

### Addition of secondary reagents in combination with supplemental heat and oxygen

Secondary reagents injection can be integrated with the current invention in order to tailor the characteristics of the final syngas. For example, kinetic modeling suggests that injection of steam (particularly steam that has been heated with an oxy-fuel burner) has been shown to increase the yield of hydrogen while significantly increasing the H2/CO ratio. Injection of hydrocarbons, such as methane or large quantities of stream 19 tail gas, can also increase the hydrogen yield while also increasing the overall syngas (CO + H₂) amount. The increase in syngas yield associated with hydrocarbon addition reduces the concentration of the CO₂ in the final syngas, which reduces CO₂ removal costs.

By enhancing the reforming kinetics (through the use of supplementary heat) the current invention enables reforming of tars and methane in devices where cold oxidants would be less effective. For example, the heat and oxidants can be injected into headspace above the gasifier, or in a duct downstream from the gasifier, where the residence time would be very short. Under these conditions it would be possible to g a significant improvement in reforming with the current invention compared to injection of oxygen without heat.

The temperature and quantity of the preheated oxidant can be optimized based on the final use of the 'cleaned' syngas. One extreme is mild reforming of tars with high condensation temperatures to facilitate use of 'dirty' syngas in combustion systems. Since tars are more easily reformed than methane, less oxygen will be required for reforming just tar. The other extreme is the full conversion of methane and tars to CO + H₂ for use in downstream chemicals/fuels processing systems.

It should be noted that CO₂ in the syngas is a diluent in the conversion step. Depending on the CO₂ content of the syngas the final cleanup step could involve CO₂ removal - an expensive unit operation for small scale gasification systems. Such a system is commercially available and typically deploys the use of physical solvents, e.g. methanol, or chemical solvents, e.g. amines. For some syngas streams, particularly those with high CO₂ concentrations, the current invention is expected to significantly reduce the CO₂ content in the syngas coming from the biomass gasifier. For these syngas streams, this reduction in CO₂ flowrate will significantly reduce the energy consumption (recycle rates and regeneration energy) from the CO₂ removal system or potentially eliminate the need for CO₂ removal altogether.

For these high CO₂ syngas streams, operating with the reformer with the hot oxygen generator as described herein, with suitable O₂ injection rates, may lower the CO₂ levels from >30 vol.% to < 15 vol.%. This correspondingly reduces the size of the CO₂ removal system compared to what would be required for the high CO₂ concentration syngas. In some cases, it may be advantageous to eliminate the CO₂ removal system altogether, as long as the fuel conversion process can accommodate the additional diluent in the syngas stream. It is important to note that the reduction in CO₂ levels with the high (>20%) CO₂ concentration syngas streams is accompanied by a simultaneous increase in CO levels, which will lower the effective H₂/CO ratio (possibly affecting the efficiency of the Fischer-Tropsch or other fuel production operations). However, this can be compensated for by adding H₂ or H₂-rich syngas to the treated syngas that is fed to the fuel production reactor. Therefore for those raw syngas streams with high CO₂ concentrations it may be advantageous to use hot oxygen alone (without superheated steam) for reforming.

The current invention has several advantages over the prior art. First, in order to enhance the reforming of tars and methane the reformer temperature must be higher than the syngas outlet temperature typical of low temperature gasifiers. By injecting cold oxidant, air or oxygen, into the syngas the prior art essentially uses a portion of the syngas as 'fuel' to preheat the remainder to the operating temperature of the reformer. In the current invention this consumption of syngas is avoided by providing an alternate means of heating the syngas. In the optimal mode the heat and oxygen are injected into the syngas simultaneously through the use of a hot oxygen generator such as is described herein. The resulting hot, reactive, jet of oxygen from the hot oxygen generator can dramatically reduce the time for mixing and accelerate the oxidation and reforming kinetics. This accelerated oxidation and reforming with hot oxygen also allows tar and methane reforming to occur in much shorter residence times and lower temperatures than with cold oxygen in the prior art.

Another benefit of the current invention is related to the increased operational flexibility of the process. By adding heat and oxygen to the syngas independently (even if simultaneously) the proportion of each can be varied based on the gasifier conditions. For example, if the syngas temperature entering the reformer is increased due to changes in gasifier operation, the amount of supplemental heat can be reduced. The inherent flexibility of the invention allows an operator to easily adjust parameters, such as the total supplemental heat, amount of oxidizer, and amount of secondary reactants in response to changes in gasifier feedstock, raw syngas composition, or desired reformed syngas composition. Finally, the current invention can increase the incremental hydrogen production over the state of the art while using the same amount of oxidant.

The proposed concept does an effective job of reforming CH₄, tar and other hydrocarbon species to H₂ and CO, as measured in terms of incremental H₂ and combined CO and H₂. Also, for select syngas streams and at suitable oxygen addition rates, there is a significant reduction in CO₂ levels in the syngas, which could ultimately translate to an increase in the overall conversion levels of carbon in the biomass to the desired liquid fuel. The reduction in the CO₂ concentration can also be accomplished through the use of secondary reactants coupled with supplementary heat and oxygen. For example, a fuel such as methane or stream 19 tail gas could be used to increase the syngas volume, and potentially reform some of the exisiting CO₂, such that the CO₂ levels in the resulting syngas are reduced.

The current invention increases the overall process efficiency of converting biomass to alternate fuels, such as transportation fuels. Nominally, up to 50% of the energy in the syngas from a biomass gasifier is contained in tars, CH₄ and other hydrocarbon species. Reforming the tar, methane, and other hydrocarbons, increases the syngas flow-rate and allows more product fuel to be produced for a given amount of biomass. By more effectively utilizing the oxidant (ie, getting a higher syngas yield per amount of oxidant) the operator can either use less oxidant and therefore lower their costs, or use the same amount of oxidant and get a higher specific yield. The higher specific yield allows the operator to either reduce the biomass firing rate (if the ethanol production portion of the process is limiting) or produce more bio-derived transportation fuels. Both of these strategies will increase revenue for the operator. The inherent flexibility of the invention also allows the operator to better optimize the system based on the feedstock being used so that only the minimum amount of oxidant is used. Finally, by reducing the mixing and enhancing kinetics it may be possible to reduce the size of the secondary reformer as compared to using air or cold oxygen alone.

It has also been determined that for some raw syngas composition, and at suitable oxygen addition rates, there is a significant reduction in CO₂ levels in the syngas. This reduces the size of the CO₂ removal system in the final cleanup stage for gasifiers producing these high CO₂ raw syngas streams. In some cases, it may eliminate the need for the CO₂ removal system altogether. This provides a significant reduction in the overall capital and operating costs. Also, shifting some of the CO₂ to CO in the reformer, makes more syngas available for conversion to a liquid fuel. This essentially increases the biofuel yield for a given amount of biomass.

### EXAMPLE 1

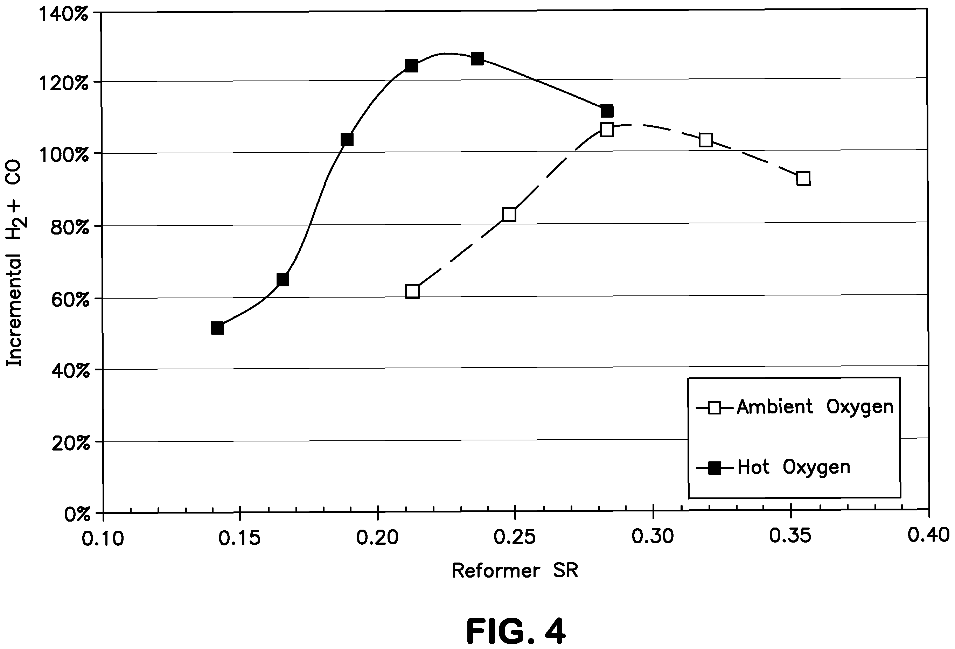

The effectiveness of using the hot oxygen generator described above for tar and methane reforming was evaluated using a kinetic model. The raw syngas was assumed to leave the gasifier at 1500 °F (816°C) and have the composition shown in Table 1. Tar species were modeled using C₂H₄ as a surrogate. The reformer was assumed to be adiabatic and have approximately a 2.5 second residence time. Figure 4 illustrates the effectiveness of hot oxygen for reforming, based on the incremental CO+H₂ formed. As can be seen from the figure the addition of heat to the oxygen increases the reforming effectiveness for a given reformer stoichiometric ratio. This reformer stoichiometric ratio (also referred to as "SR") is defined as the free oxygen injected into the syngas divided by the amount of oxygen required to completely combust the syngas. Note: the reformer SR as defined here does not include the oxygen consumed by the supplementary fuel to generate the heat. Although slightly more total oxygen is injected for a given reformer SR, if oxygen consumed to generate heat is included, the amount is small compared to the value of the added syngas.

**Table 1. Raw Syngas Composition in Kinetic Studies**

| species | vol % |
|---|---|
| H₂ | 22.0% |
| H₂O | 13.0% |
| CH₄ | 15.0% |
| CO | 14.0% |
| CO₂ | 34.0% |
| C₂H₄ | 2.0% |

In this example the supplemental heat for the reformer at SR=0.21 can be calculated. In these calculations the oxygen temperature was assumed to be 77°F (25°C), and no secondary reactants were used so the heat input from preheat is zero. The fuel input was 1,780 Btu (lower heating value) per lb of total oxygen injected (4140 kJ/kg O₂). The sensible heat at 1500 °F (816°C) of the reaction products from the fuel and the oxygen was 473 Btu/lb total oxygen (1573 kJ/kg O₂). Therefore in this case the supplemental heat was 1,307 Btu/lb total oxygen (3040 kJ/kg O₂). If a secondary reactant, such as steam, had been included the enthalpy of the steam at the injection temperature would have been included as an input. The enthalpy of the injected steam at the syngas temperature (assumed 1500 °F (816°C)) would have been counted in the sensible heat portion. Therefore, if the injected steam temperature is less than the syngas temperature, it decreases the supplemental heat value. In table 2 1 Btu/lb O₂ is equivalent to 2.326 kJ/kg O₂.

**Table 2. Example calculation of supplemental heat**

| | **Heat (Btu/Ib O₂)** |
|---|---|
| **O₂ preheat** | 0 |
| **Fuel** | 1780 |
| **Sensible heat** | -473 |
| **Supplemental heat** | **1307** |

Table 3 shows the results from the kinetic model for the optimal oxygen injection rate for this particular case. These data illustrate that when syngas heating is combined with oxidant injection the optimal SR (excluding the oxygen consumed to generate heat) is actually lower than the cold oxygen case. The incremental hydrogen and syngas (moles of H₂ + CO) generation are also much higher than the cold oxygen case. Even when the analysis is performed based on the total oxygen injection (not shown) the hot oxygen provides higher syngas yields than cold oxygen at the same oxygen injection rate. The H₂/CO ratio of the cleaned syngas is higher for the hot oxygen case, which can be important for downstream processing. Further, with this particular raw syngas composition the use of oxygen actually reduces the amount and concentration of CO₂ in the final syngas, with the hot oxygen providing even lower CO₂ concentrations than cold oxygen alone.

**Table 3. Predicted performance of hot oxygen Reforming**

| | Raw Syngas | Cold Oxygen | Hot Oxygen |
|---|---|---|---|
| Species (vol %) | | | |
| H₂ | 22.0% | 22.1% | 22.6% |
| H₂O | 13.0% | 29.3% | 28.7% |
| CH₄ | 15.0% | 0.3% | 0.4% |
| CO | 14.0% | 34.1% | 34.3% |
| CO₂ | 34.0% | 15.0% | 13.8% |
| C₂H₄ | 2.0% | | |
| Optimal SR* | ----- | 0.28 | 0.21 |
| H₂/CO | 1.57 | 0.62 | 0.66 |
| Incremental H₂ | ----- | 29.3% | 47.2% |
| Incremental syngas | ----- | 357.0% | 398.0% |

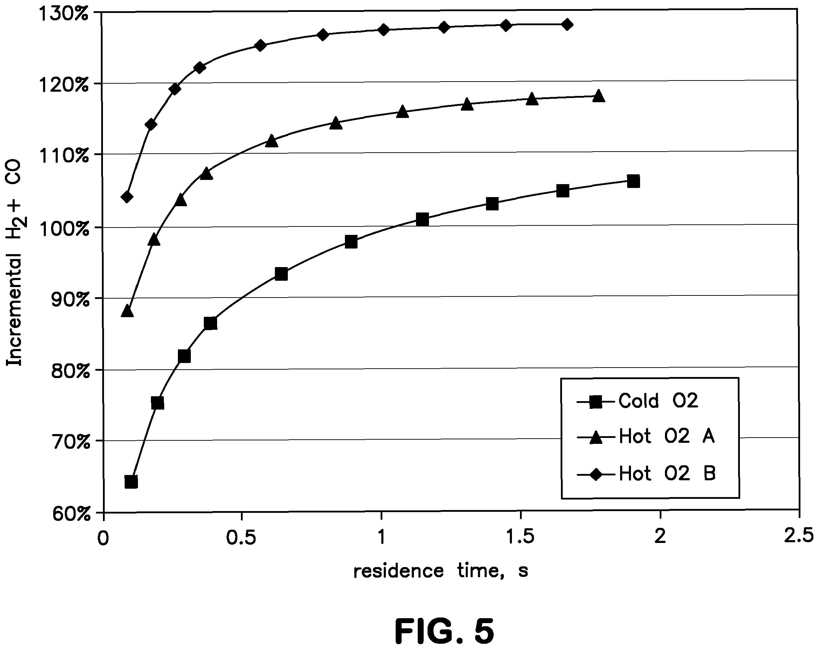

Another aspect of the optimal embodiment is the opportunity to minimize the size of the reformer device, or eliminate the separate reformer completely. As illustrated in Figure 5, when heat is injected simultaneously with oxygen using the hot oxygen generator as described herein, a substantial part of the reforming (seen as incremental yield of hydrogen plus carbon monoxide versus residence time) takes place in the first 1/2 to 1 second. For these data hot oxygen A is defined as having a stoichiometric ratio (total oxygen fed divided by the amount required to burn the injected fuel) of 6. Hot oxygen B has a stoichiometric ratio of 3. In fact, the amount of reforming with hot oxidant is much higher than with cold oxygen at short residence times. Therefore, with hot oxygen injection, it is possible to achieve reforming of the biomass-derived syngas by injecting into the duct leaving the gasifier, or by injecting the hot oxygen into the freeboard at the top of the gasifier if it present. This would result in a substantial reduction in capital cost and system complexity, and is more attractive for retrofit installations.

## Claims

1. A method of syngas treatment, comprising
(A) providing a raw syngas stream obtained by gasification of carbonaceous feed material, wherein the raw syngas stream may optionally contain tars, and comprises hydrogen and CO as well as one or more light hydrocarbons selected from the group consisting of methane, hydrocarbons containing 2 or 3 carbon atoms, and mixtures thereof; and
(B) mixing fuel and oxygen and combusting a portion of the oxygen in the mixture with said fuel to form a hot oxidant stream that has a temperature of at least 1093 °C (2000 F) and that contains oxygen and products of said combustion, and feeding said hot oxidant stream into said raw syngas stream, while imparting heat to the raw syngas stream at a rate greater than 290,75 kJ/kg (125 BTU per pound) of oxygen added, and partially oxidizing one or more of said light hydrocarbons to increase the amounts of hydrogen and CO in the syngas while converting tars if present to lower molecular weight products including hydrogen and CO, wherein said imparting heat to the raw syngas stream comprises combusting fuel and oxidant comprising at least 90 vol.% oxygen in a burner to produce a flame that heats said raw syngas stream, while adding oxygen to said raw syngas stream.

2. A method according to claim 1 wherein said fuel that is mixed with oxygen and combusted to form said hot oxidant stream, comprises gaseous byproducts formed in the production of product fuels from syngas formed in step (B).

3. A method according to claim 1 wherein step (B) comprises adding fuel and oxygen to said raw syngas and combusting said added fuel after it is added to said raw syngas stream.

4. A method according to claim 3 wherein said fuel that is added to said raw syngas comprises gaseous byproducts formed in the production of product fuels from syngas formed in step (B).

5. A method according to claim 1 wherein said fuel that is combusted in said burner comprises gaseous byproducts formed in the production of product fuels from syngas formed in step (B).

6. A method according to claim 1 wherein step (B) comprises heating, by indirect heat transfer, oxygen that is added to said raw syngas stream.

7. A method according to claim 1 further comprising feeding treated syngas produced in step (B) to a reactor that produces product fuel from said treated syngas, wherein said reactor also produces a tail gas and liquid byproduct stream, a portion of or all of which is added to the raw syngas and combusted to provide heat in step (B).

8. A method according to claim 7 wherein said reactor produces one or more products selected from the group consisting of methanol, ethanol and F-T liquids.

9. A method according to claim 1 wherein the raw syngas stream contains tars.

10. A method according to claim 1 or 9 which further comprises converting syngas produced by step (B) to product fuel.

11. A method according to claim 1 wherein said raw syngas stream contains tars, and wherein tars in said raw syngas stream are converted to lower molecular weight products.

## Patentansprüche

1. Verfahren zur Behandlung von Synthesegas, das Folgendes umfasst:
(A) das Bereitstellen eines durch Vergasung von kohlenstoffhaltigem Einsatzmaterial erhaltenen Rohsynthesegases, wobei der Rohsynthesegasstrom wahlweise Teere enthalten kann und Wasserstoff und CO sowie einen oder mehrere leichte Kohlenwasserstoffe umfasst, ausgewählt aus der Gruppe bestehend aus Methan, Kohlenwasserstoffen, die 2 oder 3 Kohlenstoffatome enthalten, und Mischungen davon; und
(B) das Mischen von Brennstoff und Sauerstoff und das Verbrennen eines Teils des Sauerstoffs in der Mischung mit dem Brennstoff, um einen heißen Oxidationsmittelstrom zu bilden, der eine Temperatur von mindestens 1093 °C (2000 °F) aufweist und der Sauerstoff und Produkte der Verbrennung enthält, und das Zuführen des heißen Oxidationsmittelstroms in den Rohsynthesegasstrom, während Wärme an den Rohsynthesegasstrom bei einer Rate von größer als 290,75 kJ/kg (125 BTU pro Pfund) von zugegeben Sauerstoff übertragen wird, und teilweises Oxidieren eines oder mehrerer der leichten Kohlenwasserstoffe, um die Mengen an Wasserstoff und CO in dem Synthesegas zu steigern, während Teere, falls vorhanden, zu Produkten mit niedrigerem Molekulargewicht, einschließlich Wasserstoff und CO, umgewandelt werden, wobei das Übertragen von Wärme an den Rohsynthesegasstrom das Verbrennen von Brennstoff und Oxidationsmittel, umfassend mindestens 90 Vol.-% Sauerstoff, in einem Brenner umfasst, um eine Flamme zu erzeugen, die den Rohsynthesegasstrom erwärmt, während Sauerstoff zu dem Rohsynthesegasstrom zugegeben wird.

2. Verfahren nach Anspruch 1, wobei der Brennstoff, der mit Sauerstoff gemischt und verbrannt wird, um den heißen Oxidationsmittelstrom zu bilden, gasförmige Nebenprodukte umfasst, die bei der Produktion von Produktbrennstoffen aus in Schritt (B) gebildetem Synthesegas gebildet werden.

3. Verfahren nach Anspruch 1, wobei Schritt (B) das Zugeben von Brennstoff und Sauerstoff zu dem Rohsynthesegas und das Verbrennen des hinzugegebenen Brennstoffs, nachdem er zu dem Rohsynthesegasstrom gegeben worden ist, umfasst.

4. Verfahren nach Anspruch 3, wobei der Brennstoff, der zu dem Rohsynthesegas gegeben wird, gasförmige Nebenprodukte umfasst, die bei der Produktion von Produktbrennstoffen aus in Schritt (B) gebildetem Synthesegas gebildet werden.

5. Verfahren nach Anspruch 1, wobei der Brennstoff, der in dem Brenner verbrannt wird, gasförmige Nebenprodukte umfasst, die bei der Produktion von Produktbrennstoffen aus in Schritt (B) gebildetem Synthesegas gebildet werden.

6. Verfahren nach Anspruch 1, wobei Schritt (B) das Erwärmen von Sauerstoff, der zu dem Rohsynthesegasstrom gegeben wird, durch indirekten Wärmetransfer umfasst.

7. Verfahren nach Anspruch 1, ferner umfassend das Zuführen von in Schritt (B) erzeugtem behandeltem Synthesegas zu einem Reaktor, der Produktbrennstoff aus dem behandelten Synthesegas erzeugt, wobei der Reaktor auch ein Endgas und einen flüssigen Nebenproduktstrom erzeugt, von dem ein Teil oder alles zu dem Rohsynthesegas gegeben und verbrannt wird, um in Schritt (B) Wärme bereitzustellen.

8. Verfahren nach Anspruch 7, wobei der Reaktor ein oder mehrere Produkte erzeugt, ausgewählt aus der Gruppe bestehend aus Methanol, Ethanol und F-T-Flüssigkeiten.

9. Verfahren nach Anspruch 1, wobei der Rohsynthesegasstrom Teere enthält.

10. Verfahren nach Anspruch 1 oder 9, das ferner das Umwandeln von in Schritt (B) erzeugtem Synthesegas in Produktbrennstoff umfasst.

11. Verfahren nach Anspruch 1, wobei der Rohsynthesegasstrom Teere enthält und wobei die Teere in dem Rohsynthesegasstrom in Produkte mit niedrigerem Molekulargewicht umgewandelt werden.

## Revendications

1. Procédé de traitement de gaz de synthèse, comprenant
(A) la fourniture d'un courant de gaz de synthèse brut obtenu par gazéification d'un matériau d'alimentation carboné, le courant de gaz de synthèse brut pouvant éventuellement contenir des goudrons, et comprenant de l'hydrogène et du CO ainsi qu'un ou plusieurs hydrocarbures légers choisis dans le groupe constitué de méthane, d'hydrocarbures contenant 2 ou 3 atomes de carbone et de mélanges de ceux-ci ; et
(B) le mélange de combustible et d'oxygène et la combustion d'une partie de l'oxygène du mélange avec ledit combustible pour former un courant de comburant chaud qui a une température d'au moins 1093 °C (2000 °F) et contient de l'oxygène et des produits de ladite combustion, et l'introduction dudit courant de comburant chaud dans ledit courant de gaz de synthèse brut, tout en apportant de la chaleur au courant de gaz de synthèse brut à un taux supérieur à 290,75 kJ/kg (125 BTU par livre) d'oxygène ajouté, et l'oxydation partielle d'un ou plusieurs desdits hydrocarbures légers afin d'augmenter les quantités d'hydrogène et de CO dans le gaz de synthèse tout en convertissant les goudrons, lorsqu'ils sont présents, en produits de poids moléculaire inférieur y compris de l'hydrogène et du CO, où ledit apport de chaleur au courant de gaz de synthèse comprend la combustion de combustible et de comburant comprenant au moins 90 % en volume d'oxygène dans un brûleur afin de produire une flamme qui chauffe ledit courant de gaz de synthèse brut, tout en ajoutant l'oxygène audit courant de gaz de synthèse brut.

2. Procédé selon la revendication 1 dans lequel ledit combustible, qui est mélangé à l'oxygène et brûlé pour former ledit courant de comburant chaud, comprend des sous-produits gazeux formés lors de la production de combustibles produits à partir du gaz de synthèse formé à l'étape (B).

3. Procédé selon la revendication 1 dans lequel l'étape (B) comprend l'ajout de combustible et d'oxygène audit gaz de synthèse brut et la combustion dudit combustible ajouté après qu'il a été ajouté audit courant de gaz de synthèse brut.

4. Procédé selon la revendication 3 dans lequel ledit combustible qui est ajouté audit gaz de synthèse brut comprend des sous-produits gazeux formés lors de la production de combustibles produits à partir de gaz de synthèse formé à l'étape (B).

5. Procédé selon la revendication 1 dans lequel ledit combustible qui est brûlé dans ledit brûleur comprend des sous-produits gazeux formés lors de la production de combustibles produits à partir de gaz de synthèse formé à l'étape (B).

6. Procédé selon la revendication 1 dans lequel l'étape (B) comprend le chauffage, par transfert de chaleur indirect, de l'oxygène qui est ajouté audit courant de gaz de synthèse brut.

7. Procédé selon la revendication 1 comprenant en outre l'introduction du gaz de synthèse traité produit à l'étape (B) dans un réacteur qui produit du combustible produit à partir dudit gaz de synthèse traité, ledit réacteur produisant également un gaz de queue et un courant de sous-produits liquides, dont tout ou partie est ajouté au gaz de synthèse brut et brûlé pour fournir de la chaleur à l'étape (B).

8. Procédé selon la revendication 7 dans lequel ledit réacteur produit un ou plusieurs produits choisis dans le groupe constitué de méthanol, d'éthanol et de liquides F-T.

9. Procédé selon la revendication 1 dans lequel le courant de gaz de synthèse brut contient des goudrons.

10. Procédé selon la revendication 1 ou 9 qui comprend en outre la conversion du gaz de synthèse produit à l'étape (B) en combustible produit.

11. Procédé selon la revendication 1 dans lequel ledit courant de gaz de synthèse brut contient des goudrons, et dans lequel les goudrons dans ledit courant de gaz de synthèse brut sont convertis en produits de poids moléculaire inférieur.
